# EUROPÄISCHE PATENTANMELDUNG

(11) **EP 4 201 911 A1**
(43) Veröffentlichungstag der Anmeldung: **28.06.2023**
(21) Anmeldenummer: 21217189.6
(22) Anmeldetag: 22.12.2021
(51) Int. Cl.: C04B 28/14, C04B 28/16, E04B 5/00, E04F 15/12

(54) **SCHNELL TROCKNENDE SPACHTELMASSE FÜR DEKORATIVE BODENBELÄGE**

(71) Anmelder: Sika Technology AG, 6340 Baar (CH)
(72) Erfinder: KNOEBEL, Markus, 48653 Coesfeld (DE); SCHNEIDER, Nick, 48727 Billerbeck (DE)
(74) Vertreter: Sika Patent Attorneys

(57) **Zusammenfassung**

Die vorliegende Erfindung betrifft eine Bodenkonstruktion, umfassend einen Bodenbelag, insbesondere einen dekorativen Bodenbelag, und eine auf dem Bodenbelag aufgebrachte Versiegelungsschicht, wobei zwischen dem Substrat und dem Bodenbelag eine oder mehrere Grundierungen angeordnet sind und der Bodenbelag aus einer Spachtelmasse gebildet ist, die i) ein Aluminat-Bindemittel, ii) ein Calciumsulfat-Bindemittel, iii) einen oder mehrere Füllstoffe, iv) Ethylhydroxyethycellulose als Verdickungsmittel, v) Kammpolymer, das an einem Polymerrückgrat daran gebundene Seitenketten mit ionischer Gruppe und Seitenketten mit Ethergruppe aufweist, als Fließmittel und vi) ein oder mehrere Farbpigmente als farbgebendes Mittel umfasst.

Die eingesetzte Spachtelmasse ermöglicht die Herstellung dekorativer Bodenbeläge mit gleichmäßiger Oberflächenfärbung.

## Beschreibung

### Technisches Gebiet

Die vorliegende Erfindung betrifft eine Bodenkonstruktion, die einen Bodenbelag, insbesondere einen dekorativen Bodenbelag, und eine auf dem Bodenbelag aufgebrachte Versiegelungsschicht umfasst, wobei der Bodenbelag mit einer Spachtelmasse auf Calciumsulfat-Basis gebildet wird.

### Stand der Technik

Spachtelmassen auf Calciumsulfat-Basis werden zur Glättung und Nivellierung von Estrichen und anderen Böden oder Oberflächen eingesetzt und auch als Ausgleichsmassen bezeichnet.

Unter anderem im Fussbodenbereich gibt es eine Tendenz zur Verwendung von sogenannten binären und ternären Bindemitteln zur Formulierung von Baumaterialien, z.B. von Estrichen oder Spachtelmassen bzw. Spachtelmassen. Binäre Bindemittel umfassen als hydraulische Bindemittel Aluminatzement und Calciumsulfat. Ternäre Bindemittel umfassen darüber hinaus Portlandzement als drittes hydraulisches Bindemittel. Binäre und ternäre Bindemittel haben vor allem den Vorteil einer verkürzten Dauer bis zur Belegreife im Vergleich zu Normalzementen. Dies bedeutet, dass innerhalb einer kürzeren Zeit weitergearbeitet werden kann, was ein entscheidender ökonomischer Vorteil ist.

Beispielsweise betrifft die WO 2015/150319 A1 schnelltrocknende Gipszusammensetzungen auf Basis von Calciumaluminat und Calciumsulfat als hydraulische Bindemittel, insbesondere zur Verwendung als Spachtelmasse.

In vielen Anwendungen ist es gewünscht, dass die Spachtelmassen bzw. Ausgleichsmassen auf Calciumsulfat-Basis in der fertigen Bodenkonstruktion als Bodenbelag sichtbar bleiben. Solche dekorativen Bodenbeläge werden in der Regel mit Hilfe von farbgebenden Mitteln wie Farbpigmenten gefärbt und mit einer Versiegelung geschützt.

Es besteht aber das Problem, dass die Optik von gefärbten Bodenbelägen auf Calciumsulfat-Basis den hohen Anforderungen an dekorative Bodenbeläge nicht gerecht wird, insbesondere wenn der Bodenbelag eine dunklere Farbe aufweisen soll. Häufig sind Fehler wie sogenannte Ölaugen, feine Löcher und Schlierenbildung und insgesamt eine ungleichmäßige Färbung auf dem gebildeten Bodenbelag festzustellen. Auch Risse sind möglich.

### Darstellung der Erfindung

Aufgabe der vorliegenden Erfindung ist die Bereitstellung einer Bodenkonstruktion mit einem Bodenbelag auf Calciumsulfat-Basis, insbesondere einem dekorativen Bodenbelag, der eine gleichmäßige Färbung zeigt, insbesondere bei dunkleren Farben, und so als ästhetisch anspruchsvoller dekorativer Bodenbelag eingesetzt werden kann. Insbesondere sollten optisch sichtbare Fehler wie sogenannte Ölaugen, feine Löcher und Schlierenbildung soweit wie möglich vermieden werden. Darüber hinaus soll der aufgebrachte Bodenbelag schnell trocknen und so eine schnelle Weiterverarbeitung ermöglichen.

Die Erfinder haben festgestellt, dass diese Aufgabe gelöst werden kann, indem zur Herstellung des Bodenbelags eine Spachtelmasse auf Basis von Aluminatzement und Calciumsulfat verwendet wird, dem eine spezieller Celluloseether als Verdickungsmittel und ein spezielles Fließmittel als Additive zugesetzt werden.

Die Erfindung betrifft daher eine Bodenkonstruktion auf einem Substrat, umfassend einen Bodenbelag, insbesondere einen dekorativen Bodenbelag, und eine auf dem Bodenbelag aufgebrachte Versiegelungsschicht, wobei zwischen dem Substrat und dem Bodenbelag eine oder mehrere Grundierungen angeordnet sind und der Bodenbelag aus einer mit Wasser gemischten und gehärteten Spachtelmasse gebildet ist, wobei die Spachtelmasse umfasst
i) ein Aluminat-Bindemittel ausgewählt aus Calciumaluminatzement und/oder Calciumsulfoaluminatzement,
ii) ein Calciumsulfat-Bindemittel ausgewählt aus Calciumsulfat-Hemihydrat und/oder Calciumsulfat-Anhydrit,
iii) einen oder mehrere Füllstoffe,
iv) Ethylhydroxyethycellulose als Verdickungsmittel,
v) Kammpolymer, das ein Copolymer ist, das ein Polymerrückgrat und daran gebundenen Seitenketten umfasst und wenigstens eine ionisierbare Monomereinheit M1 sowie wenigstens eine Seitenketten-tragende Monomereinheit M2 vorliegen, wobei die ionische Gruppe der ionisierbaren Gruppe aus Carboxylat, Sulfonat, Phosphat oder Phosphonat ausgewählt ist und die Seitenketten-tragende Monomereinheit M2 mindestens eine Ethergruppe aufweist, als Fließmittel und
vi) ein oder mehrere Farbpigmente als farbgebendes Mittel,
   wobei die Menge an Füllstoff 15 bis 70 Gew.-% beträgt und die Gesamtmenge an Aluminat-Bindemittel und Calciumsulfat-Bindemittel 25 bis 80 Gew.-% beträgt, wobei das Gewichtsverhältnis von Aluminat-Bindemittel zu Calciumsulfat-Bindemittel im Bereich von 1:1 bis 1:8 liegt, wobei sich die Gewichtsangaben auf das Trockengewicht der Spachtelmasse beziehen.

Die erfindungsgemäße Bodenkonstruktion weist einen Bodenbelag mit sehr gleichmäßiger Färbung auf, insbesondere bei dunkleren Farben, und eignet sich als dekorativer Bodenbelag. Fehler wie Ölaugen, feine Löcher und Schlierenbildung werden nicht oder nur im geringen Umfang festgestellt. Die Farbpigmente sind homogen im Bodenbelag verteilt. Der Bodenbelag ist zudem schnelltrocknend, so dass eine Versiegelung bereits nach relativ kurzer Zeit, z.B. nach spätestens 48 h, möglich ist.

Weitere Vorteile der Erfindung sind:
- geringe Schrumpfung der Spachtelmasse beim Trocknen
- gute mechanische Eigenschaften des Bodenbelags, z.B. im Hinblick auf Druck- und Biegefestigkeit
- schnelle Frühfestigkeit
- Niedriger pH-Wert der Spachtelmasse (pH < 11,5)
- Verwendung von alternativen Bindemitteln statt Portlandzement, was ökologisch von Vorteil ist, insbesondere niedrigerer CO₂-Fußabdruck im Vergleich zu klassischen Bindemittelsystemen auf Basis von Zementen
- der Bodenbelag weist wenige bis keine feinen Löcher auf, die sonst häufig durch das eingesetzte Verdickungsmittel verursacht werden
- kein zusätzlicher Entschäumer notwendig, da das eingesetzte Fließmittel auch entschäumend wirkt
- Pigmentanteil kann verringert werden
- die Spachtelmasse ist mit Wasser vermischt pumpfähig.

### Wege zur Ausführung der Erfindung

Die Erfindung betrifft eine Bodenkonstruktion auf einem Substrat, wobei die Bodenkonstruktion einen Bodenbelag und eine auf dem Bodenbelag aufgebrachte Versiegelungsschicht umfasst, wobei zwischen Substrat und Bodenbelag eine oder mehrere Grundierungen angeordnet sind.

Bei dem Bodenbelag handelt es sich insbesondere einen dekorativen Bodenbelag, d.h. der Bodenbelag ist nach der Fertigstellung der Bodenkonstruktion sichtbar. Es handelt sich vorzugsweise um einen farbigen Bodenbelag, insbesondere einen dunkelfarbigen Bodenbelag. Beispiele für Farben des Bodenbelags sind weiß, schwarz, grau, bunt oder eine Mischung davon, wobei als bunte Farben z.B. blau, lila (bzw. violett), rot, dunkelrot, gelb, orange oder pink, grün oder braun oder Zwischentöne davon geeignet sind. Besonders bevorzugt ist der Bodenbelag schwarz, grau und weiß. Wie angeführt, zeichnet sich der Bodenbelag der erfindungsgemäßen Bodenkonstruktion durch eine sehr gleichmäßige bzw. homogene Färbung weitgehend ohne Fehlstellen aus.

Der Bodenbelag bzw. dekorative Bodenbelag ist aus einer mit Wasser gemischten und gehärteten Spachtelmasse gebildet. Die Spachtelmasse ist insbesondere eine feste Spachtelmasse, z.B. in Form eines Pulvers.

Die Spachtelmasse umfasst
i) ein Aluminat-Bindemittel ausgewählt aus Calciumaluminatzement und/oder Calciumsulfoaluminatzement,
ii) ein Calciumsulfat-Bindemittel ausgewählt aus Calciumsulfat-Hemihydrat und/oder Calciumsulfat-Anhydrit,
iii) einen oder mehrere Füllstoffe,
iv) Ethylhydroxyethycellulose als Verdickungsmittel,
v) Kammpolymer, das ein Copolymer ist, das ein Polymerrückgrat und daran gebundenen Seitenketten umfasst und wenigstens eine ionisierbare Monomereinheit M1 sowie wenigstens eine Seitenketten-tragende Monomereinheit M2 vorliegen, wobei die ionische Gruppe der ionisierbaren Gruppe aus Carboxylat, Sulfonat, Phosphat oder Phosphonat ausgewählt ist und die Seitenketten-tragende Monomereinheit M2 mindestens eine Ethergruppe aufweist, als Fließmittel und
vi) ein oder mehrere Farbpigmente als farbgebendes Mittel.

Das Aluminat-Bindemittel ist Calciumaluminatzement und/oder Calciumsulfoaluminatzement. Das Aluminat-Bindemittel ist bevorzugt Calciumsulfoaluminatzement. Das Aluminat-Bindemittel ist ein hydraulisches Bindemittel.

Gemäß einer Ausführungsform enthält das Aluminat-Bindemittel mindestens einen Calciumaluminatzement (CAC). Ein Calciumaluminatzement (CAC) ist gemäß der vorliegenden Erfindung insbesondere ein Zement, umfassend einen Klinker, der hydraulische Calciumaluminate umfasst, wobei die Hauptphase bevorzugt CA (C: CaO; A: Al₂O₃) ist. Andere Calciumaluminate, wie z.B. C₂A, C₃A, C₁₂A₇, sind typischerweise ebenfalls vorhanden. CAC für die vorliegende Erfindung können typischerweise auch andere Phasen, ausgewählt aus Gehlenit (C₂AS mit C: CaO, A: Al₂O₃, S: SiO₂), Perovskit (CT mit C: CaO, T: TiO₂), Belit (C₂S mit C: CaO, S: SiO₂), Tricalciumsilicat, Ferriten (C₂F, C₂AF, C₄AF mit C: CaO; A: Al₂O₃; F: Fe₂O₃), Ternesit (C₅S₂$ mit C: CaO, S: SiO₂; $: SO₃) und Aluminumoxid, enthalten. CAC der vorliegenden Erfindung können ferner Calciumcarbonat enthalten. Insbesondere entspricht ein CAC der vorliegenden Erfindung bevorzugt der Norm EN 14647. CAC, die in anderen Normen beschrieben werden, z.B. ASTM oder chinesische Normen, sind in gleicher Weise geeignet. Geeignete CAC können z.B. kommerziell von Royal White Cement bezogen werden.

Gemäß einer Ausführungsform enthält das Aluminat-Bindemittel mindestens einen Calciumsulfoaluminat (CSA)-zement. Ein CSA-Zement ist gemäß der vorliegenden Erfindung insbesondere ein Zement, umfassend einen Klinker, der C₄(A₃₋ₓFₓ)$ (C: CaO; A: Al₂O₃; F: Fe₂O₃; $: SO₃), wobei x eine ganze Zahl von 0 - 3 ist, umfasst. CSA für die vorliegende Erfindung können typischerweise weitere Phasen enthalten, die ausgewählt sind aus Aluminaten (CA, C₃A, C₁₂A₇, mit C: CaO; A: Al₂O₃), Belit (C₂S, mit C: CaO, S: SiO₂), Ferriten (C2F, C2AF, C4AF, mit C: CaO; A: Al₂O₃; F: Fe203), Ternesit (C₅S₂$ mit C: CaO, S: SiO₂; $: SO₃) und Anhydrit. In bestimmten Ausführungsformen der Erfindung enthält der CSA 15-75 Gew.-% C₄A₃$, 0-10 Gew.-% Aluminate, 0-70 Gew.-% Belit, 0-35 Gew.-% Ferrite, 0-20 Gew.-% Ternesit und 0-25 Gew.-% Anhydrit, jeweils bezogen auf das Gesamttrockengewicht des CSA-Zements. Gegebenenfalls enthaltenes Anhydrit ist Bestandteil des CSA-Zements und diesem zuzurechnen. Geeignete CSA können z.B. unter dem Handelsnamen Calumex von Caltra B.V. bezogen werden.

Das Calciumsulfat-Bindemittel ist ein hydraulisches Bindemittel. Das Calciumsulfat-Bindemittel ist ausgewählt aus Calciumsulfat-Hemihydrat (CaSO₄ · ½ H₂O) und/oder Calciumsulfat-Anhydrit (CaSO₄), wobei Calciumsulfat-Hemihydrat bevorzugt ist. Calciumsulfat-Anhydrit ist wasserfreies Calciumsulfat (kein Kristallwasser). Calciumsulfat-Hemihydrat umfasst alpha-Calciumsulfat-Hemihydrat und beta-Calciumsulfat-Hemihydrat, wobei alpha-Calciumsulfat-Hemihydrat bevorzugt ist.

In Bezug auf die Calciumsulfat-Bindemittel ist es bevorzugt, wenn es im Wesentlichen oder vollständig aus Calciumsulfat-Hemihydrat besteht, da ein zu hoher Anteil an Anhydrit zu einer zu schnellen Wasseraufnahme durch den Anhydritbestandteil führt, was die Verarbeitbarkeit der Zusammensetzung beeinträchtigen kann. Infolgedessen ist es bevorzugt, wenn von der Gesamtmenge an Calciumsulfat-Bindemittel mindestens 80 Gew.-%, bevorzugt mindestens 90 Gew.-%, und besonders bevorzugt mindestens 95 Gew.-% auf das Calciumsulfat-Hemihydrat entfallen (Rest Calciumsulfat-Anhydrit).

Calciumsulfat-Dihydrat (CaSO₄ · 2H₂O) ist nicht in der Lage, Wasser zu binden, und fällt daher hier nicht unter das Calciumsulfat-Bindemittel. In der Spachtelmasse kann aber gegebenenfalls auch Calciumsulfat-Dihydrat enthalten sein. Calciumsulfat-Dihydrat kann als sogenannter Anreger ("nucleating agent") dienen und bewirkt eine schnellere Reaktion des Calciumsulfat-Halbhydrates. Die Spachtelmasse umfasst daher bevorzugt Calciumsulfat-Dihydrat.

Die Spachtelmasse enthält ferner einen oder mehrere Füllstoffe, die auch als Aggregate bezeichnet werden. Dabei kann es sich um jedes feste Material handeln, das bezüglich der Hydratationsreaktion des hydraulischen Binders nicht reaktiv ist. Als Füllstoffe bzw. Aggregate können, die dem Fachmann auf dem Gebiet bekannten Stoffe eingesetzt werden. Beispiele für Füllstoffe bzw. Aggregate sind Gestein, Schotter, Kies, Schlacke, gemahlenes Gestein, recyclierte Gesteinskörnung, Recyclingbeton, Sand, wie Quarzsand oder Flusssand, gemahlenes Gestein, Glas, Blähglas, Hohlglasperlen, Glaskeramik, Vulkangestein, Bimsstein, Perlit, Vermiculit, Porzellan, elektrogeschmolzene oder gesinterte Schleifmittel, Brennhilfsmittel, Siliciumdioxid-Xerogele, Carbonate, wie gemahlener Kalkstein, gemahlener Dolomit und Kreide, und/oder gemahlenes Aluminiumoxid.

Es können feste Materialien verwendet werden, für die nach (Wieder)verwertungsmöglichkeiten gesucht wird. Beispiele für solche Füllstoffe bzw. Aggregate sind:
(i) Materialien biologischen Ursprungs, bevorzugt pflanzlichen Ursprungs, insbesondere Materialien pflanzlichen Ursprungs, die im Wesentlichen aus Cellulose und/oder Lignin bestehen.
(ii) synthetische nicht-mineralische Materialien, vorzugsweise ausgewählt aus thermoplastischen oder duroplastischen Kunststoffen, Elastomeren, Kautschuken, Textilfasern, mit Glas- oder Kohlenstofffasern verstärkten Kunststoffmaterialien
(iii) anorganische Aggregate aus dem Rückbau von Bauwerken des Hoch- und Tiefbaus, vorzugsweise ausgewählt aus Betonabfällen, Mörtel, Ziegel, Naturstein, Asphalt, Fliesen, Kacheln, Porenbeton, Klinker, Metallschrott
(iv) organische Aggregate aus dem Recycling von Industrieprodukten, insbesondere schwer zu recycelnde Verbundwerkstoffe, insbesondere recycelte Dämmstoffe.
v) gesundheitlich unbedenkliche körnige Materialien, die üblicherweise zur Deponierung bestimmt sind, wie z.B. gebrauchte Gießereisande, Katalysatorträger, Klinkerzuschläge, Füllstoffe aus der Behandlung von Aushubschlamm, Klärschlamm, Gülle, Papierabfälle, Papierverbrennungsaschen, Hausmüllverbrennungsaschen.

In einer bevorzugten Ausführungsform umfassen oder sind der bzw. die Füllstoffe bzw. Aggregate Sand und/oder carbonatische Füllstoffe, bevorzugt in Form von Calciumcarbonat. Geeignete Sande sind zum Beispiel in den Normen ASTM C778 oder EN 196-1 beschrieben. Calciumcarbonat umfasst auch Kalkstein und Kreide. Der Sand kann insbesondere Quarzsand oder Flusssand sein.

Ein geeigneter Quarzsand weist z.B. eine Sieblinie im Bereich von etwa 0 bis 0,5 mm, bevorzugt im Bereich von etwa 0,08 bis 0,4 mm, auf. Ein weiterer geeigneter Quarzsand weist z.B. eine Partikelgröße im Bereich von etwa 0,1 bis 1 mm, bevorzugt von etwa 0,2 bis 0,8 mm auf.

Ein geeignetes Calciumcarbonat weist z.B. einen mittleren Teilchendurchmesser im Bereich von 2,5 µm und eine Kornlinie mit Rückstandsfreiheit von etwa 40 µm auf. Ein geeignetes Kalksteinmehl weist z.B. eine Feinheit von < 0,1 mm auf.

Im Folgenden beziehen sich auf die Spachtelmasse bezogene Gewichtsangaben auf das Trockengewicht der Spachtelmasse, sofern nicht anders angegeben.

Die Gesamtmenge an Aluminat-Bindemittel und Calciumsulfat-Bindemittel in der Spachtelmasse beträgt 25 bis 80 Gew.-%, bevorzugt 30 bis 75 Gew.-%, bevorzugter 40 bis 70 Gew.-%.

Das Gewichtsverhältnis von Aluminat-Bindemittel zu Calciumsulfat-Bindemittel in der Spachtelmasse liegt im Bereich von 1:1 bis 1:8, bevorzugt im Bereich von 1:1,6 bis 1:4, bevorzugter 1:2 bis 1:3,5. Besonders bevorzugt liegt das Gewichtsverhältnis von Aluminat-Bindemittel zu Calciumsulfat-Bindemittel im Bereich von 1:2,1 bis 1:3.

Die Menge an Füllstoff in der Spachtelmasse beträgt 15 bis 70 Gew.-%, bevorzugt 25 bis 60 Gew.-%.

In einer bevorzugten Ausführungsform umfasst die Spachtelmasse:
i) 10 bis 30 Gew.-% des Aluminat-Bindemittels,
ii) 20 bis 60 Gew.-%, bevorzugt 30 bis 55 Gew.-%, des Calciumsulfat-Bindemittels und
iii) 15 bis 70 Gew.-%, bevorzugt 25 bis 60 Gew.-% des oder der Füllstoffe.

Die Spachtelmasse enthält ferner iv) Ethylhydroxyethycellulose als Verdickungsmittel. Es können ein oder mehrere Ethylhydroxyethycellulosen eingesetzt werden. Solche Cellulosether sind im Handel erhältlich. Eine bevorzugt eingesetzte Ethylhydroxyethycellulose ist z.B. Bermocoll^{®} E 230 X von Nouryon HQ, Niederland.

Die Ethylhydroxyethycellulose hat bevorzugt eine feine Teilchengröße, z.B. eine Teilchengröße d₉₈ von nicht mehr als 1000 µm, bevorzugt nicht mehr als 600 µm. Bermocoll^{®} E 230 X hat z.B. eine Teilchengröße d₉₈ von nicht mehr als 425 µm (98% der Teilchen ≤ 425 µm).

Die Teilchengröße kann vorliegend mittels Laserbeugung bestimmt werden, wie in ISO 13320:2009 beschrieben. Insbesondere wird ein Mastersizer 2000 Gerät mit einer Hydro 2000G Dispergiereinheit und der Mastersizer 2000 Software von Malvern Instruments GmbH (Deutschland) verwendet. Als Messmedium eignet sich z.B. Isopropanol. Vorzugsweise wird die Partikelgröße von nicht kugelförmigen oder unregelmäßigen Partikeln durch den äquivalenten Kugeldurchmesser einer Kugel mit gleichem Volumen dargestellt. Eine Teilchengröße d₉₈ entspricht dabei der Teilchengröße, bei der 98 Gew-% aller Teilchen keiner sind.

Der Gehalt an Celluloseether in der Spachtelmasse liegt bevorzugt im Bereich von 0,01 bis 0,2 Gew.-%, bevorzugter 0,02 bis 0,1 Gew.-%, bezogen auf das Trockengewicht der Spachtelmasse.

Der erfindungsgemäß eingesetzte Celluloseether bildet im Gegensatz zu üblicherweise eingesetzten Verdickungsmitteln nur wenige oder gar keine feinen Löcher, wodurch die Optik des Bodenbelags deutlich verbessert werden kann.

Die Spachtelmasse enthält ferner v) Kammpolymer, das ein Copolymer ist, dass ein Polymerrückgrat und daran gebundenen Seitenketten umfasst und wenigstens eine ionisierbare Monomereinheit M1 sowie wenigstens eine Seitenketten-tragende Monomereinheit M2 vorliegen, wobei die ionische Gruppe der ionisierbaren Gruppe aus Carboxylat, Sulfonat, Phosphat oder Phosphonat ausgewählt ist und die Seitenketten-tragende Monomereinheit M2 mindestens eine Ethergruppe aufweist, als Fließmittel.

Solche Kammpolymere sind z.B. in der WO 2017/050896 A1 beschreiben. Bei den in dieser Patenanmeldung beschriebenen Kammpolymeren weist das Kammpolymer bzw. Copolymer in einer Richtung entlang des Polymerrückgrats eine nicht-zufällige Verteilung der Seitenketten mit ionischer Gruppe und der Seitenketten mit mindestens einer Ethergruppe auf, wobei die Seitenketten des Copolymers bevorzugt in wenigstens einem Abschnitt eine Gradientenstruktur und/oder eine Blockstruktur aufweisen. Erfindungsgemäß können Copolymere mit einer solchen Verteilung der Seitenketten eingesetzt werden. Es können aber auch entsprechende Kammpolymere eingesetzt werden, die keine Block- oder Gradientenstruktur haben, sondern bei denen die Seitenketten am Polymerrückgrat statistisch verteilt sind.

Es können ein oder mehrere Kammpolymere eingesetzt werden. Kammpolymere, bei denen die ionische Gruppe eine Carboxylatgruppe ist, sind bevorzugt. Das Kammpolymer ist daher bevorzugt ein Polycarboxylatether (PCE). Solche Fließmittel, insbesondere PCE-Fließmittel, sind dem Fachmann bekannt. Sie werden auch als "Superplasticizer" bezeichnet.

Das Kammpolymer ist bevorzugt ein Copolymer, wobei im Copolymer eine eingebaute ionisierbare Monomereinheit M1 eine Struktur der Formel I aufweist, 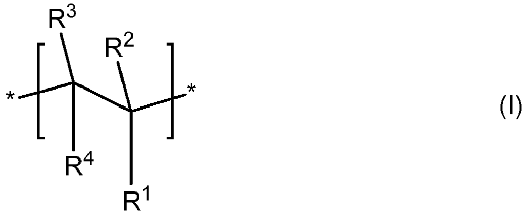 und die Seitenketten-tragende Monomereinheit M2 eine Struktur der Formel II beinhaltet 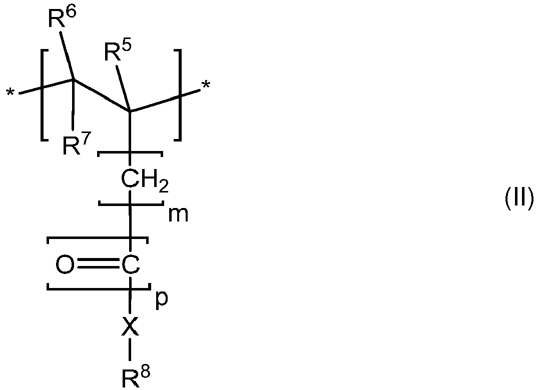 wobei
R¹, jeweils unabhängig voneinander, für -COOM, -SO₂-OM, -O-PO(OM)₂ und/oder -PO(OM)₂ steht,
R², R³, R⁵ und R⁶, jeweils unabhängig voneinander, für H oder eine Alkylgruppe mit 1 bis 5 Kohlenstoffatomen stehen,
R⁴ und R⁷, jeweils unabhängig voneinander, für H, -COOM oder eine Alkylgruppe mit 1 bis 5 Kohlenstoffatomen stehen,
oder wobei R¹ mit R⁴ einen Ring zu -CO-O-CO- bilden kann,
M, unabhängig voneinander, H⁺, ein Alkalimetallion, ein Erdalkalimetallion, ein zwei oder dreiwertiges Metallion, ein Ammoniumion oder eine organische Ammoniumgruppe darstellt;
m = 0, 1 oder 2 ist,
p = 0 oder 1 ist,
X, jeweils unabhängig voneinander, für -O- oder -NH- steht,
R⁸ für eine Gruppe der Formel -[AO]n-R^{a} steht,
   wobei A = C₂- bis C₄-Alkylen, R^{a} für H, eine C₁- bis C₂₀-Alkylgruppe, -Cycloalkylgruppe oder -Alkylarylgruppe steht,
und n = 2 - 250, insbesondere 10 - 200 ist.

Das Molverhältnis der Monomereinheiten M1 zu den Monomereinheiten M2 im Copolymer kann im Bereich von 0.5 - 6, insbesondere 0.7 - 4, bevorzugt 0.9 - 3.8, weiter bevorzugt 1.0 - 3.7 oder 2 - 3.5, liegen.

Es ist bevorzugt, dass R¹ = COOM ist; R² und R⁵, unabhängig voneinander, für H, -CH₃ oder Mischungen daraus stehen; R³ und R⁶, unabhängig voneinander, für H oder -CH₃, bevorzugt für H, stehen; R⁴ und R⁷, unabhängig voneinander, für H oder -COOM, bevorzugt für H, stehen; und wobei X bei wenigstens 75 Mol-%, insbesondere bei wenigstens 90 Mol-%, speziell bei wenigstens 99 Mol-% aller Monomereinheiten M2 für -O- steht.

Das Copolymer kann gegebenenfalls weitere Monomereinheiten enthalten, die von M1 und M2 verschieden sind.

Der Gehalt an Kammpolymer in der Spachtelmasse liegt bevorzugt im Bereich von 0,05 bis 0,5 Gew.-%, bevorzugter 0,1 bis 0,3 Gew.-%, wobei sich die Gewichtsangaben auf das Trockengewicht der Spachtelmasse beziehen.

Das Kammpolymer weist auch eine entschäumende Funktion auf. Daher ist es nicht notwendig, einen zusätzlichen Entschäumer in die Formulierung aufzunehmen. Entschäumer werden üblicherweise eingesetzt, damit die Luftblasen während des Anmischprozesses verringert werden und schnellstmöglich im Nachhinein reduziert bis eliminiert werden. Dadurch werden nachteilige Eigenschaften minimiert wie z.B. Reduktion der Festigkeiten und inhomogene Oberflächenoptik. Insbesondere die Irritation durch sogenannte «Pinholes» (nadelstichartige Luftblasen) sorgen dafür, dass nachträgliche Beschichtungen auch nur unter Optik von Blasenbildungen appliziert werden können.

Es ist ein Vorteil, dass kein Einsatz von zusätzlichem Entschäumer erforderlich ist, da damit die Aufgabe entfällt, verträgliche und miteinander kompatible Fließmittel und Entschäumer zu finden. Gerade bei hohem optischen Anspruch besteht hier durchaus eine Problematik, da nicht alle Systeme miteinander kompatibel sind.

Üblicherweise eingesetzte Entschäumer weisen den Nachteil auf, die in der Spachtelmasse enthaltenen Farbpigmente an die Oberfläche der Spachtelmasse zu befördern, was zu einer inhomogenen Verteilung führen kann. Dadurch können Oberflächenfehler wie Ölaugen oder inhomogene Pigmentierung entstehen.

Die Spachtelmasse enthält daher bevorzugt im Wesentlichen keine Entschäumer, z.b. weniger als 0,1 Gew.-%, insbesondere ist die Spachtelmasse bevorzugt frei von Entschäumer. Bei den Entschäumern handelt es sich insbesondere um siliconhaltige und siliconfreie Polymere oder auf Basis von Mineralöl und/oder Polyglykol, die eine entschäumende Wirkung aufweisen. Das eingesetzte Kammpolymer wird hier nicht als Entschäumer angesehen.

Die Spachtelmasse umfasst ferner vi) ein oder mehrere Farbpigmente als farbgebendes Mittel. Das oder die Farbpigmente dienen dazu, den Bodenbelag mit der gewünschten Färbung zu versehen. Im Gegensatz zu Füllstoffen weisen sie eine hohe Deckkraft auf, so dass sie bereits in relativ geringen Mengen (z.B. weniger als 4 Gew.-%) eine homogene Färbung des Bodenbelags ermöglichen.

In einer bevorzugten Ausführungsform sind das oder die Farbpigmente ausgewählt aus weißen Farbpigmenten, schwarzen Farbpigmenten, bunten Farbpigmenten oder Mischungen davon. Graue Farbtöne können z.B. durch Mischung von weißen und schwarzen Pigmenten erhalten werden. Als bunte Farben eignen sich z.B. blaue, lilafarbene (bzw. violette), grüne, braune, rote, gelbe, orange oder pinke Pigmente. Durch Mischung mit schwarzen Pigmenten können dunkle Töne erzielt werden. Das oder die Farbpigmente sind bevorzugt schwarze Farbpigmente, es sind aber auch alle anderen Farbpigmente denkbar.

Beispiele für geeignete Farbpigmente sind anorganische oder organische Pigmente, z.B. Metalloxide und Metallmischoxide, wie Titandioxid, Chromoxid, Eisenoxid, Eisen-Mangan-Mischoxid, oder Ruß. Als Farbpigmente eignen sich z.B. die Produkte aus der Reihe Xfast^{®} von BASF, Deutschland.

Der Gesamtanteil an Farbpigmenten in der Spachtelmasse kann z.B. im Bereich von 0,01 bis 4 Gew.-%, bevorzugt 0,1 bis 2 Gew.-%, liegen.

Die Spachtelmasse kann neben den genannten Additiven ferner ein oder bevorzugt mehrere weitere Additive enthalten.

In einer bevorzugten Ausführungsform umfasst die Spachtelmasse ferner mindestens ein Polyol mit einer Funktionalität von 4 oder kleiner und einer Dichte an OH-Gruppen von mindestens 0,033 mol OH pro g Polyol. Ein Polyol weist mindestens 2 Hydroxygruppen auf. Das mindestens eine Polyol ist bevorzugt Glycerin und/oder Erythritol, bevorzugt Erythritol. Bevorzugt wird nur ein solches Polyol verwendet.

Es ist bekannt, dass auch auf binäre oder ternäre Bindemittel basierende Zusammensetzungen während des Abbinde- und Trocknungsprozesses gewöhnlich einer Schwindung unterworfen sind. Ein solches Schwinden ist für die Gebrauchstauglichkeit nachteilig, da sie z.B. häufig die Ursache für die Bildung von Rissen oder die Aufwölbung von Estrichen sein kann. Es hat sich herausgestellt, dass die Verwendung mindestens eines vorgenannten Polyols zu einer besonders großen Verringerung der Schwindung führt.

Das mindestens ein Polyol, bevorzugt Glycerin und/oder Erythritol, ist bevorzugt in einer Menge von 0,5 Gew.-% bis 10 Gew.-%, bevorzugter 1,2 Gew.-% bis 6,5 Gew.-%, bezogen auf das Gewicht des Aluminat-Bindemittels, enthalten. Es hat sich herausgestellt, dass die Verringerung des Schwindens bei solchen Dosiermengen von Polyol besonders ausgeprägt ist.

In einer bevorzugten Ausführungsform umfasst die Spachtelmasse ferner mindestens ein Lithiumsalz, das die Härtung der Zusammensetzung beschleunigt. Geeignete Lithiumsalze sind z.B. Lithiumsulfat und Lithiumhalogenide, insbesondere Lithiumchlorid, sowie Lithiumcarbonat. Am meisten bevorzugt ist Lithiumcarbonat.

Das Lithiumsalz, insbesondere Lithiumcarbonat oder Lithiumsulfat, ist bevorzugt in einer Menge von 0,001 bis 0,5 Gew.-%, bevorzugter 0,005 bis 0,05 Gew.-%, in der Spachtelmasse enthalten. Bei weniger als 0,001 % ist die Konzentration in der Regel zu gering, um eine merklich beschleunigende Wirkung zu vermitteln, während ein Zusatz von mehr als 0,5 Gew.-% zu einer zu schnellen Härtung der Zusammensetzung führen kann.

In einer bevorzugten Ausführungsform enthält die Spachtelmasse ferner Weinsäure und/oder ein Weinsäuresalz, bevorzugt ein Alkalimetallsalz der Weinsäure, bevorzugt in einer Menge von 0,15 bis 0,005 Gew.-%, bevorzugter 0,1 bis 0,01 Gew.-%, besonders bevorzugt 0,08 bis 0,015 Gew.-%. Bevorzugt ist Natrium- oder Kaliumtartrat oder das Mischsalz Natrium/Kaliumtartrat.

Der Zusatz von Weinsäure und/oder einem Weinsäuresalz hat positive Auswirkungen auf das Expansionsverhalten der Spachtelmasse, indem eine zu starke Expansion des Materials unterdrückt werden kann. Um einen entsprechenden Effekt zu erzielen, werden im Allgemeinen mindestens 0,005 Gew.-% eingesetzt, während mehr als 0,15 Gew.-% zu einer zu starken Verzögerung der Abbindung führen können.

In einer besonders bevorzugten Ausführungsform enthält die Spachtelmasse alle der vorstehend genannten Additive. Die Spachtelmasse kann noch weitere übliche zusätzliche Additive enthalten z.B. Härtungsverzögerer und/oder Flexibilisierungsmittel. Die Gesamtkonzentration solcher zusätzlichen Additive liegt z.B. bei weniger als 10 Gew.-%, bevorzugt weniger als 5 Gew.-% und bevorzugter weniger als 3 Gew.-%, zweckmäßig im Bereich von etwa 0,1 bis 10 Gew.-%, bevorzugt etwa 0,5 bis 5 Gew.-%, bevorzugter etwa 1 bis 3 Gew.-%.

Beispiele für geeignete Flexibilisierungsmittel sind organische Polymere, z.B. auf Basis von Vinylacetat und Ethylen, die z.B. als Vinnapas^{®}5025 L von Wacker erhältlich sind. Ein geeigneter Verzögerer ist z.B. unter dem Handelsnamen Retardan^{®} P von der Sika Schweiz AG erhältlich. Weitere geeignete Verzögerer sind Natriumgluconat, oder Natriumeitrat.

Die Spachtelmasse kann ferner Portlandzement enthalten, das ist aber im Allgemeinen nicht bevorzugt. Die Spachtelmasse kann z.B. bis zu 5 Gew.- %, bevorzugt nicht mehr als 3 Gew.-%, bevorzugter nicht mehr als 1 Gew.-%, insbesondere nicht mehr als etwa 0,1 Gew.-% an Portlandzement enthalten. Die Spachtelmasse ist aber bevorzugt frei von Portlandzement. Die Spachtelmasse ist auch bevorzugt frei von anderen Aktivatoren, insbesondere Calciumhydroxid, Natriumhydroxid, Kaliumhydroxid, Alkaliwassergläsern und Mischungen davon. Solche Aktivatoren, insbesondere Portlandzement, wirken als Basen und beeinflussen den pH-Wert.

Ein weiteres mögliches Additiv ist Kaliumsulfat. Kaliumsulfat beeinflusst aktiv die Bildung von Gips bei vorhandenem Calciumsulfat. Dadurch tritt eine beschleunigte Phasenbildung ein sowie i.d.R. eine Verringerung des Quellprozesses.

Die Mengen der einzelnen Bestandteile in der Spachtelmasse können auch von der Art der Applikation und der aufgetragenen Schichtdicke abhängen.

Eine vorteilhafte Ausführungsform der erfindungsgemäßen Spachtelmasse enthält
10 bis 25 Gew.-% Aluminat-Bindemittel,
30 bis 60 Gew.-% Calciumsulfat-Hemihydrat,
5 bis 12 Gew.-% Calciumcarbonat, z.B. Kreide und/oder Kalkstein, als Füllstoff, 10 bis 40 Gew.-% Quarzsand,
0,01 bis 0,10 Gew.-% Kaliumnatriumtartrat,
0,005 bis 0,5 Gew.-% Lithiumsalz, insbesondere Lithiumcarbonat oder Lithiumsulfat.

Die Spachtelmassen der vorliegenden Erfindung sind insbesondere trockene Zusammensetzungen, die aber eine Restanteil an Wasser enthalten können. Der Gehalt an Wasser in Spachtelmassen der vorliegenden Erfindung ist gewöhnlich kleiner 3 Gew.-%, bevorzugt kleiner 2 Gew.-%, mehr bevorzugt kleiner 1 Gew.-%, jeweils bezogen auf die gesamte Masse der Spachtelmasse. Solche trockenen Spachtelmassen haben eine verbesserte Lagerstabilität.

Die Dicke des Bodenbelags/Spachtelmasse kann je nach Anwendungsfall variieren. Im Allgemeinen weist der Bodenbelag, insbesondere der dekorative Bodenbelag, bevorzugt eine Schichtdicke im Bereich von 1 bis 100 mm, bevorzugter 5 bis 75 mm, besonders bevorzugt 3 bis 30 mm.

Weitere Angaben zur Herstellung des Bodenbelags aus der Spachtelmasse sind nachstehend bezüglich des erfindungsgemäßen Verfahrens angeführt.

In der erfindungsgemäßen Bodenkonstruktion ist auf dem Bodenbelag, insbesondere dem dekorativen Bodenbelag, eine Versiegelungsschicht angeordnet. Solchen Versiegelungen sind auf dem Gebiet der Bodenkonstruktionen üblich und es können die gängigen Versiegelungsschichten eingesetzt werden.

Die Versiegelungsschicht dient zum Schutz des Bodenbelags, z.B. vor Staub, Schmutz oder Verfärbungen, wodurch die ansprechende dekorative Wirkung geschützt wird.

Die Versiegelungsschicht ist bevorzugt transparent oder transluzent. Sie ist ferner alternativ oder zusätzlich farblos. Sie kann z.B. matt oder glänzend sein.

Als Versiegelungsschicht eignet sich z.B. eine Kunststoffversiegelung, wobei eine Epoxidharzversiegelung oder eine Polyurethanversiegelung bevorzugt ist.

Die Versiegelungsschicht kann unmittelbar auf den zu schützenden Bodenbelag aufgebracht sein. Es ist aber auch möglich, zwischen dem Bodenbelag und der Versiegelungsschicht eine Grundierung anzuordnen. Die Grundierung kann für eine verbesserte Haftung zwischen Versiegelungsschicht und Bodenbelag sorgen.

Die Grundierung kann zum Beispiel mit 50 bis 200 g/m², 75 bis 150 g/m², aufgebracht werden. Es können ein, zwei oder mehr solcher Grundierungen übereinander aufgebracht werden.

Bei der erfindungsgemäßen Bodenkonstruktion sind zwischen dem Substrat und dem Bodenbelag eine oder mehrere Grundierungen angeordnet. Es können die gängigen, dem Fachmann bekannten Grundierungsmittel eingesetzt werden, z.B. Kunststoffdispersionen oder zweikomponentige Bindemittel. Eine geeignete Grundierung ist eine Kunststoffgrundierung, z.B. eine Epoxydharzgrundierung. Als Grundierung, insbesondere als Vorgrundierung, eignet sich z.B. auch eine Acrylatgrundierung.

Besonders bevorzugt ist eine Epoxydharzgrundierung. Diese sorgt für die geringst möglichen Beeinträchtigungen von dem Untergrund zur Spachtelmasse, z.B. im Hinblick auf Blasenbildung.

Die Grundierung kann gegebenenfalls abgestreut werden. Zur Abstreuung eignet sich z.B. Quarzsand. Das Abstreumaterial wird dabei auf die aufgebachte, noch frische Grundierung verteilt. Solche Abstreuungen sind dem Fachmann bekannt.

In einer bevorzugten Ausführungsform kann das Substrat mit einer Vorgrundierung, bevorzugt einer Acrylatgrundierung, und anschließend mit einer oder mehrerer Grundierungen, bevorzugt Epoxydharzgrundierung(en) versehen werden, wobei die Grundierung besonders bevorzugt abgestreut wird.

Die Grundierung oder abgestreute Grundierung ist vorteilhaft, da sie die Erzielung einer gleichmäßigen Färbung des Bodenbelags fördert. Insbesondere können durch die Grundierung optische Fehler im Bodenbelag wie feine Löcher in der dekorativen Schicht und Unregelmäßigkeiten in der Färbung noch weiter reduziert werden. Als besonders günstig haben sich dabei Epoxidharz-Grundierungen und Epoxidharz-Grundierungen, die mit Quarzsand (z.B. Teilchengröße 0,2 bis 0,8 mm) abgestreut wurden, erwiesen.

Das Substrat, auf das nach einer Vorbehandlung mit einer oder mehreren Grundierungen die Spachtelmasse aufgebracht wird, , unterliegt keinen Beschränkungen. Beispiele für geeignete Substrate sind Substrate aus Beton, Estriche, Altuntergründe mit keramischen Belägen, Altuntergründe auf der Basis von Estrichen oder Beton. Das Substrat ist bevorzugt ein auf Zement, wie Portlandzement, oder auf Calciumsulfat basierendes Substrat. Das Substrat ist bevorzugt ein Substrat aus Beton, Estrich oder Schnellestrich.

Die erfindungsgemäße Bodenkonstruktion umfasst somit mindestens eine Grundierung auf dem Substrat, die gegebenenfalls abgestreut ist, wobei die Grundierung bevorzugt eine Epoxidharzgrundierung ist, über der Grundierung den Bodenbelag, insbesondere den dekorativen Bodenbelag, und eine Versiegelungsschicht, z.B. eine Epoxidharzschicht oder eine Polyurethanschicht, als Schutzschicht über dem Bodenbelag.

Die erfindungsgemäße Bodenkonstruktion ist bevorzugt eine Fußbodenkonstruktion, insbesondere für den Innenraumbereich. Besonders geeignet ist die Bodenkonstruktion für einen Fußboden von Wohnräumen und/ oder Verkaufsflächen von Ladenlokalen.

Die Erfindung betrifft auch die Verwendung einer Spachtelmasse zur Herstellung eines Bodenbelags, insbesondere eines dekorativen Bodenbelags, auf einem mit einer oder mehreren Grundierungen versehenen Substrat, wobei die Spachtelmasse umfasst
i) ein Aluminat-Bindemittel ausgewählt aus Calciumaluminatzement und/oder Calciumsulfoaluminatzement,
ii) ein Calciumsulfat-Bindemittel ausgewählt aus Calciumsulfat-Hemihydrat und/oder Calciumsulfat-Anhydrit,
iii) einen oder mehrere Füllstoffe,
iv) Ethylhydroxyethycellulose als Verdickungsmittel,
v) Kammpolymer, das ein Copolymer ist, das ein Polymerrückgrat und daran gebundenen Seitenketten umfasst und wenigstens eine ionisierbare Monomereinheit M1 sowie wenigstens eine Seitenketten-tragende Monomereinheit M2 vorliegen, wobei die ionische Gruppe der ionisierbaren Gruppe aus Carboxylat, Sulfonat, Phosphat oder Phosphonat ausgewählt ist und die Seitenketten-tragende Monomereinheit M2 mindestens eine Ethergruppe aufweist, als Fließmittel und
vi) ein oder mehrere Farbpigmente als farbgebendes Mittel,
wobei die Menge an Füllstoff 15 bis 70 Gew.-% beträgt und die Gesamtmenge an Aluminat-Bindemittel und Calciumsulfat-Bindemittel 25 bis 80 Gew.-% beträgt, wobei das Gewichtsverhältnis von Aluminat-Bindemittel zu Calciumsulfat-Bindemittel im Bereich von 1:1 bis 1:8 liegt, wobei sich die Gewichtsangaben auf das Trockengewicht der Spachtelmasse beziehen.

Die vorstehenden Angaben hinsichtlich der erfindungsgemäßen Bodenkonstruktion gelten in gleicher Weise hinsichtlich der erfindungsgemäßen Verwendung, insbesondere hinsichtlich der Ausgestaltung der Spachtelmasse, des Bodenbelags, der Grundierung, der Versiegelungsschicht und des Substrats, so dass darauf verwiesen wird.

Die erfindungsgemäße Verwendung eignet sich insbesondere zur Herstellung eines dekorativen Bodenbelags mit gleichmäßiger Oberflächenfärbung. Insgesamt wird eine homogene Färbung des Bodenbelags erreicht. Es wird auf die vorstehenden Angaben verwiesen.

Die erfindungsgemäße Verwendung eignet sich insbesondere im Rahmen einer erfindungsgemäßen Bodenkonstruktion wie vorstehend beschrieben.

Die Erfindung betrifft ferner ein Verfahren zur Herstellung einer erfindungsgemäßen Bodenkonstruktion auf einem Substrat wie vorstehend beschrieben, wobei das Verfahren folgende Schritte umfasst:
a) Aufbringen von einer oder mehreren Grundierungen auf das Substrat,
b) Aufbringen einer Mischung der Spachtelmasse mit Wasser auf das grundierte Substrat und Trocknen lassen der Mischung unter Bildung des Bodenbelags und
c) Aufbringen einer Versiegelungsschicht auf den getrockneten Bodenbelag.

Die vorstehenden Angaben hinsichtlich der erfindungsgemäßen Bodenkonstruktion gelten in gleicher Weise hinsichtlich des erfindungsgemäßen Verfahrens, insbesondere hinsichtlich der Ausgestaltung der Spachtelmasse, des Bodenbelags, der Grundierung, der Versiegelungsschicht und des Substrats, so dass darauf verwiesen wird.

Das Substrat wird vor dem Aufbringen der Spachtelmasse gemäß Schritt a) mit einer oder mehreren Grundierungen versehen. Die Grundierung, auch als Primer bezeichnet, wird dabei auf das Substrat aufgetragen, z.B. durch Aufstreichen. Eine solche Vorbehandlung ist dem Fachmann bekannt.

Es können gängige Grundierungsmittel eingesetzt werden, z.B. Kunststoffdispersionen oder zweikomponentige Grundierungsmittel auf Basis organischer Bindemittel. Ein Beispiel ist eine zweikomponentiges Epoxidharzbindemittel als Grundierungsmittel. Das Grundierungsmittel kann durch gewöhnliche Beschichtungsverfahren auf das Substrat aufgebracht werden.

Es kann zweckmäßig sein, die eine oder die mehreren aufgebrachte Grundierungen abzustreuen. Ein geeignetes Abstreumaterial ist Quarzsand.

Im erfindungsgemäßen Verfahren wird in Schritt b) die Spachtelmasse mit Wasser vermischt. Die mit Wasser gemischte, frische Spachtelmasse kann fließfähig oder pastös sein. In einer Ausführungsform kann die Spachtelmasse selbstverlaufend sein.

Da die Spachtelmasse hydraulische Bindemittel in Form von Aluminat-Bindemittel und Calciumsulfat-Bindemittel enthält, finden nach der Zugabe von Wasser bekanntlich Hydratationsreaktionen statt. Durch Trocknen bzw. Abbinden findet mit der Zeit eine Aushärtung der Spachtelmasse statt. Die Aufbringung auf das grundierte Substrat erfolgt, wenn die Spachtelmasse noch fließfähig oder pastös ist.

Die Konsistenz bzw. das rheologische Verhalten der Spachtelmasse kann neben der Wahl der eingesetzten Additive insbesondere auch durch das Mischverhältnis von Spachtelmasse und Wasser eingestellt werden. Es ist bevorzugt, die Spachtelmasse mit Wasser in einem Massenverhältnis von Wasser zu Spachtelmasse im Bereich von 0,08 bis 0,40, bevorzugt 0,10 bis 0,30, insbesondere 0,15 bis 0,23, zu mischen. Die erhaltene Spachtelmasse ist vorteilhafterweise pumpfähig, was den Transport erleichtert.

Die mit Wasser gemischte Spachtelmasse wird dann auf das grundierte Substrat aufgebracht. Die Aufbringung kann mit allen dem Fachmann bekannten Mitteln erfolgen, z.B. mittels Kelle, Rechen, Rakel oder Rolle, durch Gießen oder mittels Spritz- oder Sprühverfahren, bevorzugt mittels Kelle, Rakel, Gießen oder Rechen. Nach Auftrag wird die Auftragsmasse zweckmäßigerweise geglättet, z.B. mit einer Glättkelle.

Nach dem Aufbringen der Spachtelmasse auf das mit einer oder mehreren Grundierungen vorbehandelte Substrat lässt man die Spachtelmasse trocknen. Ein Vorteil des erfindungsgemäßen Verfahrens besteht darin, dass die Spachtelmasse schnell trocknet, so dass nach einer relativ kurzen Trocknungsdauer, z.B. spätestens nach 48 Stunden, eine Weiterverarbeitung des gebildeten Bodenbelags möglich ist bzw. Belegreife erreicht wird, insbesondere um die Versiegelungsschicht aufzubringen.

Gemäß Schritt c) des erfindungsgemäßen Verfahrens erfolgt das Aufbringen einer Versiegelungsschicht auf den abgetrockneten Bodenbelag. Gegebenenfalls kann vor dem Aufbringen der Versiegelungsschicht der Bodenbelag noch mit einer Grundierung versehen werden. Die Versiegelungsschicht ist bevorzugt eine Kunststoffversiegelung, wobei eine Epoxidharzversiegelung oder eine Polyurethanversiegelung bevorzugt ist.

Die Versiegelungsschicht kann z.B. durch übliche Beschichtungsverfahren auf den Bodenbelag aufgebracht werden. Als Beschichtungsmaterial können bevorzugt Polymerdispersionen oder Reaktionsharze, z.B. in Form von Zweikomponentensystemen, zur Herstellung der Versiegelungsschicht verwendet werden. Die Versiegelung kann durch ein- oder mehrmaligen Auftrag des Beschichtungsmaterials auf den Bodenbelag gebildet werden.

Die Erfindung betrifft auch eine Spachtelmasse zur Herstellung eines Bodenbelags, insbesondere eines dekorativen Bodenbelags, auf einem grundierten Substrat, wobei die Spachtelmasse umfasst
i) ein Aluminat-Bindemittel ausgewählt aus Calciumaluminatzement und/oder Calciumsulfoaluminatzement,
ii) ein Calciumsulfat-Bindemittel ausgewählt aus Calciumsulfat-Hemihydrat und/oder Calciumsulfat-Anhydrit,
iii) einen oder mehrere Füllstoffe,
iv) Ethylhydroxyethycellulose als Verdickungsmittel,
v) Kammpolymer, das ein Copolymer ist, dass ein Polymerrückgrat und daran gebundenen Seitenketten umfasst und wenigstens eine ionisierbare Monomereinheit M1 sowie wenigstens eine Seitenketten-tragende Monomereinheit M2 vorliegen, wobei die ionische Gruppe der ionisierbaren Gruppe aus Carboxylat, Sulfonat, Phosphat oder Phosphonat ausgewählt ist und die Seitenketten-tragende Monomereinheit M2 mindestens eine Ethergruppe aufweist, als Fließmittel und
vi) ein oder mehrere Farbpigmente als farbgebendes Mittel,
wobei die Menge an Füllstoff 15 bis 70 Gew.-% beträgt und die Gesamtmenge an Aluminat-Bindemittel und Calciumsulfat-Bindemittel 25 bis 80 Gew.-% beträgt, wobei das Gewichtsverhältnis von Aluminat-Bindemittel zu Calciumsulfat-Bindemittel im Bereich von 1:1 bis 1:8 liegt, wobei sich die Gewichtsangaben auf das Trockengewicht der Spachtelmasse beziehen.

Die vorstehenden Angaben zur Spachtelmasse, die in der erfindungsgemäßen Bodenkonstruktion verwendet wird, gelten in gleicher Weise hinsichtlich der erfindungsgemäßen Spachtelmasse, so dass darauf verwiesen wird.

Die Erfindung wird nachfolgend anhand von Ausführungsbeispielen näher erläutert. Die Beispiele dienen zur Veranschaulichung und sollen die vorliegende Erfindung in keiner Weise einschränken.

### Ausführungsbeispiele

### Beispiel 1

### Formulierungen 1 bis 5

Es wurden Spachtelmassen gemäß den in der folgenden Tabelle 1 angegebenen Formulierungen 1 bis 5 hergestellt. Tabelle 1 gibt die prozentualen Gewichtsanteile der Inhaltsstoffe, bezogen auf das Gewicht der Spachtelmasse, an. Die Formulierungen 1 und 2 sind Spachtelmassen, die nicht gemäß der Erfindung sind. Die Formulierungen 3 bis 5 sind Spachtelmassen gemäß der Erfindung.

Die Formulierung 1 enthält keine Farbpigmente. Die Formulierungen 3 bis 5 ergeben grau, hellgrau bzw. weißgrau gefärbte Bodenbeläge.

**Tabelle 1. Spachtelmasse Formulierungen 1-5**

| Komponente | Funktion | **1* (nicht pigmentiert)** | **2* (pigmentiert)** | **3 (grau)** | **4 (hellgrau)** | **5 (weißgrau)** |
|---|---|---|---|---|---|---|
| | | Gew.-% | Gew.-% | Gew.-% | Gew.-% | Gew.-% |
| Calciumsulfat Dihydrat | | 1,000 | 1,000 | 0,250 | 0,250 | 0,250 |
| Polyvinylalkohol | Antiblockmittel | 1,500 | 1,500 | | | |
| Vinylacetat-Ethylen-Copolymer | Redispersionspulver | | | 1,500 | 1,500 | 1,500 |
| Kalium-Natrium-Tartrat | Verzögerer | 0,050 | 0,050 | 0,030 | 0,020 | 0,020 |
| Kaliumsulfat feinst | Anreger | 0,250 | 0,250 | | | |
| Natriumglukonat Pulver | Verzögerer | | | 0,080 | 0,090 | 0,090 |
| Lithiumcarbonat 99% | Beschleuniger | | | 0,010 | 0,010 | 0,010 |
| Erythritol | Schwindreduzierer | | | 0,250 | 0,250 | 0,250 |
| Kreide | Füllstoff | 10,000 | 10,000 | 7,500 | 7,500 | 7,500 |
| Quarzsand | Füllstoff | 14,215 | 14,215 | 24,517 | 24,925 | 25,225 |
| Alpha-Calciumsulfat-Halbhydrat | Bindemittel | 50,000 | 50,000 | 46,200 | 46,200 | 46,200 |
| modifizierte Aminosäure | Verzögerer | 0,060 | 0,060 | | | |
| PCE Typ 1 | Fließmittel | 0,150 | 0,150 | | | |
| PCE Typ 2 | Fließmittel | | | 0,200 | 0,200 | 0,200 |
| Calciumaluminat | Bindemittel | 2,000 | 2,000 | | | |
| Calciumsulfoaluminat | Bindemittel | | | 17,750 | 17,750 | 17,750 |
| Hydroxyethylcellulose Typ 1 | Verdicker | 0,045 | 0,045 | | | |
| Hydroxyethylcellulose Typ 2 | Verdicker | 0,013 | 0,013 | | | |
| Ethylhydroxyethylcellulose | Verdicker | | | 0,060 | 0,055 | 0,055 |
| Biopolymer | Viskositätsmodifizierer | | | 0,003 | | |
| Tensid-Produkt (oberflächenaktive Substanzen) | Entschäumer | 0,100 | 0,100 | | | |
| Nichtionisches Tensid | Dispergier- u. Benetzungsmittel | | | 0,150 | | |
| Kalksteinmehl | Füllstoff | 20,617 | 19,117 | | | |
| Eisen-Manpan-Oxid | Schwarzpigment | | 1,500 | 1,500 | 0,300 | |
| TiO2 | Weißpigment | | | | 0,950 | 0,950 |
| Summe | | 100,000 | 100,000 | 100,000 | 100,000 | 100,000 |

| | | | | | | |
|---|---|---|---|---|---|---|
| * nicht erfindungsgemäß | | | | | | |

### Beispiel 2

Die Formulierungen 2 und 3 von Beispiel 1 wurden auf ihre Tauglichkeit zur Bereitstellung dekorativer gefärbter Bodenbeläge getestet. Beide Formulierungen sind mit 1,5 % Schwarzpigment (Eisen-Mangan-Mischoxid) pigmentiert.

Für die Applikation wurde Formulierung 2 in einem Verhältnis von 25 kg / 6,0 l Wasser und Formulierung 3 in einem Verhältnis von 25 kg / 5,5 l Wasser mit Wasser gemischt.

In einem Vortest werden beide Formulierungen per Rakel mit einer Schichtstärke von 1 mm auf Kartonpapier aufgezogen. Nach Trocknung ist die mit Formulierung 2 erhaltene Fläche heller als die der Formulierung 3.

Aufgrund der ersten Ergebnisse werden weitere, großflächigere Flächen angelegt. Als Untergrund dienen mit einer Kunstharzdispersion (Schönox^{®} SDG Plus) grundierte und nicht saugfähige Gipskarton-Platten. Die Verarbeitung erfolgt ausschließlich mittels Glättkelle.

Die mit der erforderlichen Menge an Wasser gemischte Formulierung 2 war im Vergleich zur Formulierung 3 niedrigviskos, was die homogene Einbindung der Pigmente erschwert. Der Farbton des mit der Formulierung 2 erhaltenen Bodenbelags war heller als der der Formulierung 3. Bei der Formulierung 2 wäre zur Erzielung eines gleichen Farbtons mehr Pigment erforderlich.

Der mit Formulierung 2 erhaltene Bodenbelag zeigte sowohl nach Applikation als auch nach der Trocknung Ölaugen, Schlierenbildung und Ausschwemmungen. Ohne sich an eine Theorie binden zu wollen, wird angenommen, dass die Ölaugen durch den in der Formulierung 2 enthaltenen Entschäumer verursacht werden. Dagegen zeigte der mit Formulierung 3 erhaltene Bodenbelag sowohl nach Applikation als auch nach der Trocknung weder Ölaugen, noch Schlierenbildung, noch Ausschwemmungen. Mit Formulierung 3 konnte somit ein dekorativer Bodenbelag mit gleichmäßiger Färbung weitgehend ohne optische Fehlstellen erhalten werden.

Die Ergebnisse sind in folgender Tabelle 2 zusammengefasst.

**Tabelle 2**

| | Formulierung 2 | Formulierung 3 |
|---|---|---|
| Konsistenz nach Mischen mit Wasser | niedrigviskos | höhere Viskosität im Vergleich zu Formulierung 2 |
| Konsistenz während des Auftrags | niedrigviskos | höhere Viskosität im Vergleich zu Formulierung 2 |
| Optik während des Trocknens | Ölaugen, Schlierenbildung, Ausschwemmungen | gleichmäßige Färbung |
| Optik nach Trocknen | Ölaugen, Schlierenbildung, Ausschwemmungen | gleichmäßige Färbung |
| Farbe | heller als Formulierung 3 | dunkler als Formulierung 2 |

### Beispiel 3

Mechanische Eigenschaften von Bodenbelägen, die mit den Formulierungen 3 und 5 von Beispiel 1 erstellt wurden, wurden getestet und mit Bodenbelägen aus im Markt erhältlichen, Farbpigmente enthaltenden Spachtelmassen verglichen, die eine graue Farbe (Formulierung 6) bzw. eine weißgraue Farbe (Formulierung 7) aufwiesen. Die Ergebnisse sind in Tabelle 3 gezeigt (NKL = Normalklima).

**Tabelle 3**

| **Formulierung** | **6*** | **7*** | **5** | **3** |
|---|---|---|---|---|
| **Farbe** | **grau** | **weißgrau** | **weißgrau** | **grau** |
| **Mischverhältnis** | 20 kg / 5,2 l 25 kg / 6,5 l | 20 kg / 5,2 l 25 kg / 6,5 l | 25 kg / 5,25 l | 25 kg / 5,25 l |

| **Erstarrungszeit [min]** | | | | |
|---|---|---|---|---|
| Anfang / Ende | 78 / 86 86/100 | 76 / 86 68/78 | 59/60 | 60/61 |

| **Biege- und Dru ckfestigkeit** - **Ra umklima [N/mm²]** | | | | |
|---|---|---|---|---|
| 6 h NKL | | | 3,6 / 18,5 - 18,9 3,3 / 17,4 - 18,7 | 3,5 / 16,9 - 16,4 3,4 / 17,0 - 17,4 |
| 16 h NKL | | | 5,4 / 28,0 - 24,7 5,2 / 27,9 - 29,0 | 4,8 / 29,5 - 27,0 5,1 / 27,5 - 26,3 |
| 1 d NKL | 3,3 / 12,5 - 12,3 | 3,5 / 12,5 - 12,8 | | |
| 7 d NKL | 6,6 / 24,9 - 25,5 6,3 / 23,4 - 24,1 | 6,6 / 24,4 - 26,8 6,0 /25,2 - 26,1 | 10,3 / 44,7 - 42,0 10,3 / 45,2 - 47,9 | 9,7 / 45,8 - 41,2 9,6 / 42,9 - 45,4 |
| 28 d NKL | 7,7 / 34,2 - 34,1 7,2 / 34,5 - 34,9 | 7,9 / 36,8 - 36,5 7,9 / 36,0 - 35,4 | 14,1 / 51,6 - 46,5 13,4 / 54,8 - 50,0 13,5 / 45,0 - 47,6 | 11,4 / 46,3 - 52,9 12,5 / 45,4 - 47,7 |
| 28 d NKL + 14 d bei 50 °C | | | 18,4 / 52,5 - 37,7 18,4 / 44,7 - 56,3 | 16,2 / 44,1 - 58,7 16,8 / 56,4 - 38,3 |

| **Schrumpfung** - **Raumklima (21°C und 55% rF)** | | | | |
|---|---|---|---|---|
| max. Quellung | 0,21 | 0,27 | 0,04 | 0,04 |
| Schrumpfung nach 7 d | -0,47 | -0,45 | -0,36 | -0,29 |
| Schrumpfung nach 28 d | -0,51 | -0,48 | -0,34 | -0,28 |

| | | | | |
|---|---|---|---|---|
| * nicht erfindungsgemäß | | | | |

### Beispiel 4

### Formulierungen 8 bis 14

Es wurden Spachtelmassen gemäß den in der folgenden Tabelle 4 angegebenen Formulierungen 8 bis 14 hergestellt, in denen unterschiedliche Verdickungsmittel und Fließmittel getestet wurden. Die Formulierung 8 ist gemäß der Erfindung mit PCE als Fließmittel und Ethylhydroxyethylcellulose als Verdickungsmittel. Die Formulierungen 9 bis 14 sind nicht gemäß der Erfindung (9: ohne Verdicker, 10: ohne PCE, 11: anderes Fliessmittel, 12: anderer Verdicker, 13: ohne Verdicker, ohne Fließmittel, 14: anderes Fliessmittel, anderer Verdicker).

In den Vergleichsversuchen wurden unter anderem als Fließmittel Melment F^{®}245 von BASF (Superplasticizer), ein sulfoniertes Kondensationsprodukt auf Melaminbasis, und als Verdickungsmittel Bentone^{®}DY-CE von Elementis UK Ltd, ein organisch modifizierter Smektit-Ton, eingesetzt. Die eingesetzten Komponenten entsprechen ansonsten weitgehend den für die Formulierungen 1 bis 5 eingesetzten Komponenten. Die Eigenschaften der Formulierungen wurden bezüglich Verarbeitbarkeit und Optik getestet, wofür sie mit Wasser in einem Mischverhältnis von 25 kg Formulierung pro 5,25 l Wasser gemischt wurden und anschließend wurden die angemischten Formulierungen, sofern verarbeitbar, per Rakel mit einer Schichtstärke von 1 mm auf Kartonpapier aufgezogen.

Parameter für die Verarbeitbarkeit wurden geprüft. Der Ausbreitungsdurchmesser wurde 3 Minuten und 20 Minuten nach dem Anmachen mit Wasser in Anlehnung an Norm EN 12350-5 gemessen. Die Optik der aufgezogenen Formulierungen wurde visuell bewertet. Die Ergebnisse sind in Tabelle 5 gezeigt.

Die Formulierungen, die nach dem Mischen mit Wasser eine dicke und zähe Konsistenz zeigen und standfest werden, können nicht auf die Unterlage aufgezogen werden. Sie sind zur Herstellung von Bodenbelägen ungeeignet. Auch die Formulierung 12 zeigt nach dem Mischen eine dicke Konsistenz und ist recht standfest und neigt deswegen nicht unbedingt zum Bluten oder zur Separation. Es ist daher nicht verwunderlich, dass sie eine relativ gute Optik zeigt. Zur Herstellung eines Bodenbelags ist sie aber ebenfalls nicht geeignet.

**Tabelle 4 - Formulierungen 8 bis 14**

| Komponente | Funktion | 8 | 9 | 10 | 11 | 12 | 13 | 14 |
|---|---|---|---|---|---|---|---|---|
| | | Gew.-Teile | Gew.-Teile | Gew.-Teile | Gew.-Teile | Gew.-Teile | Gew.-Teile | Gew.-Teile |
| Alpha-Calciumsulfat-Halbhydrat | Bindemittel | 46,200 | 46,200 | 46,200 | 46,200 | 46,200 | 46,200 | 46,200 |
| Kreide | Füllstoff | 7,500 | 7,500 | 7,500 | 7,500 | 7,500 | 7,500 | 7,500 |
| Quarzsand | Füllstoff | 24,517 | 24,517 | 24,517 | 24,517 | 24,517 | 24,517 | 24,517 |
| Calciumsulfat Dihydrat | | 0,250 | 0,250 | 0,250 | 0,250 | 0,250 | 0,250 | 0,250 |
| Vinylacetat-Ethylen-Copolymer | Redispersionspulver | 1,500 | 1,500 | 1,500 | 1,500 | 1,500 | 1,500 | 1,500 |
| Natriumglukonat Pulver | Verzögerer | 0,080 | 0,080 | 0,080 | 0,080 | 0,080 | 0,080 | 0,080 |
| Lithiumcarbonat 99% | Beschleuniger | 0,010 | 0,010 | 0,010 | 0,010 | 0,010 | 0,010 | 0,010 |
| Kalium-Natrium-Tartrat | Verzögerer | 0,030 | 0,030 | 0,030 | 0,030 | 0,030 | 0,030 | 0,030 |
| Calciumsulfoaluminat | Bindemittel | 17,750 | 17,750 | 17,750 | 17,750 | 17,750 | 17,750 | 17,750 |
| PCETyp 2 | Fließmittel | 0,200 | 0,200 | - | - | 0,200 | - | - |
| Erythritol | Schwindreduzierer | 0,250 | 0,250 | 0,250 | 0,250 | 0,250 | 0,250 | 0,250 |
| Ethylhydroxyethylcellulose | Verdicker | 0,060 | - | 0,060 | 0,060 | - | - | - |
| Nichtionisches Tensid | Dispergier- u. Benetzungsmittel | 0,150 | 0,150 | 0,150 | 0,150 | 0,150 | 0,150 | 0,150 |
| Eisen-Mangan-Oxid | Schwarzpigment | 1,500 | 1,500 | 1,500 | 1,500 | 1,500 | 1,500 | 1,500 |
| Biopolymer | Viskositätsmodifizierer | 0,003 | 0,003 | 0,003 | 0,003 | 0,003 | 0,003 | 0,003 |
| Melment F 245 | Fließmittel | - | - | - | 0,200 | - | - | 0,200 |
| Bentone DY-CE | Verdicker | - | - | - | - | 0,200 | - | 0,200 |

**Tabelle 5 - Verarbeitbarkeit der Formulierungen und Optik der Produkte**

| | 8 | 9 | 10 | 11 | 12 | 13 | 14 |
|---|---|---|---|---|---|---|---|
| Mischzeit [s] | 60 | 60 | 60 | 60 | 60 | 60 | 60 |
| Wartezeit [s] | 180 | 180 | 180 | 180 | 180 | 180 | 180 |
| Pulverbenetzung | ok | ok, etwas dünner | dick & zäh | dick & zäh | dick, besser als 8, 9 | dick & zäh | dick & zäh |
| Konsistenz beim Mischen | ok | ok, etwas dünner | dick & zäh | dick & zäh | dick, besser als 10, 11 | dick & zäh | dick & zäh |
| Konsistenz nach Mischen | ok | ok, etwas dünner | dick & zäh | dick & zäh | dick, besser als 10, 11 | dick & zäh | dick & zäh |
| Konsistenz nach Wartezeit | ok | ok, etwas dünner | dick & zäh | dick & zäh | dick, besser als 10, 11 | dick & zäh | dick & zäh |
| Konsistenz nach 20 min | leicht dicker | ok, etwas dünner | dick & zäh | dick & zäh | dick, besser als 10, 11 | dick & zäh | dick & zäh |
| Ausbreitungsdurchmesser nach 3 min | 31,0 | 37,0 | n.m., standfest | 13,5 | 25,0 | n.m., standfest | n.m., standfest |
| Ausbreitungsdurchmesser nach 20 min | 30,0 | n.m., starkes Absetzen | n.m., standfest | n.m., standfest | n.m. | n.m., standfest | n.m., standfest |
| Blutung after 15 min | ok | nok | n.m., standfest | n.m., standfest | ok | n.m., standfest | n.m., standfest |
| Stabilität im Becher | ok | nok | ok | ok | ok | ok | ok |
| Stabilität Ausbreitungsdurchmesser | ok | nok | n.m., standfest | n.m., standfest | ok | n.m., standfest | n.m., standfest |
| Optik | ok | nok | n.m., standfest | n.m., standfest | ok | n.m., standfest | n.m., standfest |

Legende: ok: in Ordnung, nok: nicht in Ordnung, n.m: nicht messbar/bestimmbar

## Patentansprüche

1. Bodenkonstruktion auf einem Substrat, umfassend einen Bodenbelag, insbesondere einen dekorativen Bodenbelag, und eine auf dem Bodenbelag aufgebrachte Versiegelungsschicht, wobei zwischen dem Substrat und dem Bodenbelag eine oder mehrere Grundierungen angeordnet sind und der Bodenbelag aus einer mit Wasser gemischten und gehärteten Spachtelmasse gebildet ist, wobei die Spachtelmasse umfasst
i) ein Aluminat-Bindemittel ausgewählt aus Calciumaluminatzement und/oder Calciumsulfoaluminatzement,
ii) ein Calciumsulfat-Bindemittel ausgewählt aus Calciumsulfat-Hemihydrat und/oder Calciumsulfat-Anhydrit,
iii) einen oder mehrere Füllstoffe,
iv) Ethylhydroxyethycellulose als Verdickungsmittel,
v) Kammpolymer, das ein Copolymer ist, das ein Polymerrückgrat und daran gebundenen Seitenketten umfasst und wenigstens eine ionisierbare Monomereinheit M1 sowie wenigstens eine Seitenketten-tragende Monomereinheit M2 vorliegen, wobei die ionische Gruppe der ionisierbaren Gruppe aus Carboxylat, Sulfonat, Phosphat oder Phosphonat ausgewählt ist und die Seitenketten-tragende Monomereinheit M2 mindestens eine Ethergruppe aufweist, als Fließmittel und
vi) ein oder mehrere Farbpigmente als farbgebendes Mittel,
wobei die Menge an Füllstoff 15 bis 70 Gew.-% beträgt und die Gesamtmenge an Aluminat-Bindemittel und Calciumsulfat-Bindemittel 25 bis 80 Gew.-% beträgt, wobei das Gewichtsverhältnis von Aluminat-Bindemittel zu Calciumsulfat-Bindemittel im Bereich von 1:1 bis 1:8 liegt, wobei sich die Gewichtsangaben auf das Trockengewicht der Spachtelmasse beziehen.

2. Bodenkonstruktion nach Anspruch 1, wobei der Gehalt an Ethylhydroxyethycellulose im Bereich von 0,01 bis 0,2 Gew.-%, bevorzugt 0,02 bis 0,1 Gew.-%, liegt und/oder der Gehalt an Kammpolymer im Bereich von 0,05 bis 0,5 Gew.-%, bevorzugt 0,1 bis 0,3 Gew.-%, liegt, wobei sich die Gewichtsangaben auf das Trockengewicht der Spachtelmasse beziehen.

3. Bodenkonstruktion nach einem der vorhergehenden Ansprüche, wobei das Kammpolymer ein Polycarboxylatether (PCE) ist.

4. Bodenkonstruktion nach einem der vorhergehenden Ansprüche, wobei die Ethylhydroxyethycellulose eine Teilchengröße d₉₈ von nicht mehr als 1000 µm, bevorzugt nicht mehr als 600 µm, aufweist.

5. Bodenkonstruktion nach einem der vorhergehenden Ansprüche, wobei das oder die Farbpigmente ausgewählt sind aus weißen Farbpigmenten, schwarzen Farbpigmenten, bunten Farbpigmenten oder Mischungen davon, und/oder der oder die Füllstoffe Sand und/oder Calciumcarbonat umfassen.

6. Bodenkonstruktion nach einem der vorhergehenden Ansprüche, wobei die Spachtelmasse umfasst:
i) 10 bis 30 Gew.-% des Aluminat-Bindemittels,
ii) 20 bis 60 Gew.-% des Calciumsulfat-Bindemittels und
iii) 15 bis 70 Gew.-% des oder der Füllstoffe.

7. Bodenkonstruktion nach einem der vorhergehenden Ansprüche, wobei die Versiegelungsschicht eine Kunststoffversiegelung, bevorzugt eine Epoxydharzversiegelung oder Polyurethanversiegelung, ist, und/oder die Versiegelungsschicht transparent oder transluzent ist.

8. Bodenkonstruktion nach einem der vorhergehenden Ansprüche, wobei der Bodenbelag eine Schichtdicke im Bereich von 1 bis 100 mm, bevorzugt 5 bis 75 mm, besonders bevorzugt 3 bis 30 mm, aufweist.

9. Verwendung einer Spachtelmasse zur Herstellung eines Bodenbelags, insbesondere eines dekorativen Bodenbelags, auf einem mit einer oder mehreren Grundierungen versehenen Substrat, wobei die Spachtelmasse umfasst
i) ein Aluminat-Bindemittel ausgewählt aus Calciumaluminatzement und/oder Calciumsulfoaluminatzement,
ii) ein Calciumsulfat-Bindemittel ausgewählt aus Calciumsulfat-Hemihydrat und/oder Calciumsulfat-Anhydrit,
iii) einen oder mehrere Füllstoffe,
iv) Ethylhydroxyethycellulose als Verdickungsmittel,
v) Kammpolymer, das ein Copolymer ist, das ein Polymerrückgrat und daran gebundenen Seitenketten umfasst und wenigstens eine ionisierbare Monomereinheit M1 sowie wenigstens eine Seitenketten-tragende Monomereinheit M2 vorliegen, wobei die ionische Gruppe der ionisierbaren Gruppe aus Carboxylat, Sulfonat, Phosphat oder Phosphonat ausgewählt ist und die Seitenketten-tragende Monomereinheit M2 mindestens eine Ethergruppe aufweist, als Fließmittel und
vi) ein oder mehrere Farbpigmente als farbgebendes Mittel,
wobei die Menge an Füllstoff 15 bis 70 Gew.-% beträgt und die Gesamtmenge an Aluminat-Bindemittel und Calciumsulfat-Bindemittel 25 bis 80 Gew.-% beträgt, wobei das Gewichtsverhältnis von Aluminat-Bindemittel zu Calciumsulfat-Bindemittel im Bereich von 1:1 bis 1:8 liegt, wobei sich die Gewichtsangaben auf das Trockengewicht der Spachtelmasse beziehen.

10. Verwendung nach Anspruch 9 zur Herstellung eines dekorativen Bodenbelags mit gleichmäßiger Oberflächenfärbung.

11. Verwendung nach Anspruch 9 oder 10, wobei die Spachtelmasse wie in einem der Ansprüche 2 bis 6 definiert ist.

12. Verwendung nach einem der Ansprüche 9 bis 11 für eine Bodenkonstruktion nach einem der Ansprüche 1 bis 8.

13. Verfahren zur Herstellung einer Bodenkonstruktion auf einem Substrat nach einem der Ansprüche 1 bis 8, umfassend
a) Aufbringen von einer oder mehreren Grundierungen auf das Substrat,
b) Aufbringen einer Mischung der Spachtelmasse mit Wasser auf das grundierte Substrat und Trocknen lassen der Mischung unter Bildung des Bodenbelags und
c) Aufbringen einer Versiegelungsschicht auf den getrockneten Bodenbelag.

14. Spachtelmasse zur Herstellung eines Bodenbelags, insbesondere eines dekorativen Bodenbelags, auf einem grundierten Substrat, wobei die Spachtelmasse umfasst
i) ein Aluminat-Bindemittel ausgewählt aus Calciumaluminatzement und/oder Calciumsulfoaluminatzement,
ii) ein Calciumsulfat-Bindemittel ausgewählt aus Calciumsulfat-Hemihydrat und/oder Calciumsulfat-Anhydrit,
iii) einen oder mehrere Füllstoffe,
iv) Ethylhydroxyethycellulose als Verdickungsmittel,
v) Kammpolymer, das ein Copolymer ist, das ein Polymerrückgrat und daran gebundenen Seitenketten umfasst und wenigstens eine ionisierbare Monomereinheit M1 sowie wenigstens eine Seitenketten-tragende Monomereinheit M2 vorliegen, wobei die ionische Gruppe der ionisierbaren Gruppe aus Carboxylat, Sulfonat, Phosphat oder Phosphonat ausgewählt ist und die Seitenketten-tragende Monomereinheit M2 mindestens eine Ethergruppe aufweist, als Fließmittel und
vi) ein oder mehrere Farbpigmente als farbgebendes Mittel,
wobei die Menge an Füllstoff 15 bis 70 Gew.-% beträgt und die Gesamtmenge an Aluminat-Bindemittel und Calciumsulfat-Bindemittel 25 bis 80 Gew.-% beträgt, wobei das Gewichtsverhältnis von Aluminat-Bindemittel zu Calciumsulfat-Bindemittel im Bereich von 1:1 bis 1:8 liegt, wobei sich die Gewichtsangaben auf das Trockengewicht der Spachtelmasse beziehen.

15. Spachtelmasse nach Anspruch 14, wobei die Spachtelmasse nach einem der Ansprüche 2 bis 6 definiert ist.
